# EUROPEAN PATENT SPECIFICATION

(11) **EP 3 933 334 B1**
(45) Date of publication and mention of the grant of the patent: **05.06.2024**
(21) Application number: 21182911.4
(22) Date of filing: 30.06.2021
(51) Int. Cl.: F25D 29/00

(54) **REFRIGERATOR**
KÜHLSCHRANK
RÉFRIGÉRATEUR

(30) Priority: 01.07.2020 KR 20200081020
(43) Date of publication of application: 05.01.2022
(73) Proprietor: LG Electronics Inc., Seoul 07336 (KR)
(72) Inventor: KIM, Nayoung, 08592 Seoul (KR)
(74) Representative: Ter Meer Steinmeister & Partner

(56) References cited:
- CN-A- 106 091 526
- CN-A- 106 802 059
- CN-A- 106 839 639
- US-B2- 8 960 934

## Description

### BACKGROUND

### 1. Field of the Disclosure

The present disclosure relates to a refrigerator.

### 2. Description of the Related Art

A refrigerator is a home appliance capable of storing food at a low temperature in an internal storage space closed by a door. The refrigerator may store food in an optimal state by cooling an inside of the storage space, which may be cooled using cold air generated by heat exchange with a refrigerant circulating in a refrigeration cycle.

Refrigerators have become larger in size and more multifunctional according to changes in dietary life and the trend of high-quality products. Refrigerators including various structures and convenience devices may provide user convenience and efficiently use the internal space thereof.

As an example of the convenience device, a display may be disposed on the door of the refrigerator to indicate an operation state of the refrigerator. The display may display one or more various pieces of operation information of the refrigerator in form of numbers, letters, symbols, and/or pictures.

The user may identify the operation state of the refrigerator by checking the one or more information displayed on the display and/or manipulate to drive the refrigerator.

Korean Patent Publication No. 10-2017-0040710 discloses a refrigerator. The refrigerator includes an outer plate made of metal and defining a front surface of a refrigerator door. A display including a plurality of through-holes is disposed on the outer plate and a touch manipulating portion is disposed on the outer plate in order for the user to manipulate the touch. The refrigerator includes a display assembly and a touch assembly inside of the door.

However, for the refrigerator in the related art, when an inner case is coupled to mount the display assembly, assembly workability thereof is deteriorated and a screw fastening is required to couple to a door cap decoration, thereby increasing the number of assembly process.

CN 106 091 526 A presents a refrigerator door body display assembly and a refrigerator. The refrigerator door body display assembly comprises a door body end cover, a display embedded box, a display bracket assembly and a display cover plate, wherein the door body end cover is provided with an installation hole, and the lower end of the installation hole is provided with a clamping groove and a plurality of buckles; the upper end of the display embedded box is provided with a positioning edge matched with the clamping groove and groove holes matched with the buckles; when the positioning edge is put into the clamping groove and pushed to the bottom of the clamping groove, the display embedded box is pressed in the direction close to the door body end cover, the buckles are clamped into the groove holes, and the display embedded box is fixedly arranged at the lower end of the installation hole; the display bracket assembly penetrates through the installation hole and is arranged on the display embedded box and used for displaying operating parameters of the refrigerator; and the display cover plate is arranged at the upper end of the installation hole and fixedly connected with the door body end cover.

US 8 960 934 B2 presents a door of a refrigerator including a front panel formed of a metal material, a display unit including a display portion which is disposed at a rear side of the front panel and on which operating information of the refrigerator is displayed when the display portion becomes bright or dark, and a plurality of through holes formed in a region of the front panel corresponding to the display portion. Although the display unit is hidden inside the door, information displayed on the display unit can be seen to a user through the plurality of through holes.

### SUMMARY OF THE DISCLOSURE

It is an object of the present invention to provide a refrigerator capable of improving assembly workability and productivity of a refrigerator door.

It is an object of the present invention to provide a refrigerator capable of maintaining a mounting position of an inner case by a simple assembly operation.

The object is solved by the features of the independent claims. Preferred embodiments are given in the dependent claims.

According to the invention, a refrigerator includes the features defined in claim 1.

The inner case may include a case front surface that extends outward from the accommodating space and contacts an inner surface of the outer plate.

The refrigerator may include a sealing member made of compressive material and disposed on the case upper surface and the case front surface and configured to seal between the inner case, the outer plate, and the cap decoration.

A sealing member may be disposed between the upper surface of the case and a lower surface of the cap decoration

An extension line of the upper surface of the locking protrusion may be spaced apart from the restraining end by a set distance, and the set distance may be smaller than a thickness of the sealing member.

The inner case may be inserted into the case inserting portion to engage and restrain the restraining end with and by the restraining protrusion.

The inner case may be coupled to the outer plate by rotating a lower portion of the inner case toward the outer plate.

The refrigerator may further include an upper sealing member that is adhered to the case upper surface and an upper portion of the case front surface and configured to seal between the inner case and the cap decoration; and a lower sealing member adhered under the upper sealing member along the case front surface and configured to seal between the inner case and the outer plate.

A surface of the upper sealing member may be adhered to the inner case and two surfaces of the lower sealing member may be adhered to the inner case and the outer plate.

The case inserting portion may extend downward to contact an outer circumference of the upper surface of the inner case.

The cap decoration may include a decoration opening that communicates with the accommodating space.

The cap decoration may include a decoration cover configured to cover an upper side of the decoration opening to open and close the decoration opening.

A fastening portion may be disposed at an upper side of the inner case.

The fastening portion may protrude rearward.

A screw may be fastened to the fastening portion through the decoration cover and the cap decoration.

The case inserting portion may include a protrusion that protrudes rearward to accommodate the fastening portion.

A front side of the upper surface of the inner case may be restrained by the outer plate and both sides and a rear side of the upper surface of the inner case may be restrained by the case inserting portion.

The door may include an insulating material filled in the door.

The door may include a display assembly inserted through the decoration opening form an outside of the opening and accommodated in the accommodating space.

The refrigerator according to the embodiment of the present disclosure may expect the following effects.

According to an embodiment of the present disclosure, the cap decoration, the outer plate, and the inner case may be easily coupled before injecting the foaming liquid to mold the insulating material when a door is assembled.

In particular, the inner case may be inserted into, engaged with, and restrained by the case inserting portion of the cap decoration. Therefore, the inner case may be fixed and mounted at the accurate position by inserting and mounting the inner case without fastening a screw for additional coupling.

A sealing member made of compressible material may be disposed on an upper surface of the inner case to seal and tightly fix between the cap decoration and the upper surface of the inner case when temporarily fixing the inner case. Therefore, even if the foaming liquid is injected into the door to mold the insulating material, inflow of the foaming liquid or change of the position of the inner case due to a pressure of the foaming liquid may be prevented.

Further, the sealing member disposed on the front surface of the inner case may seal and contact the inner case and the outer plate to firmly fix the inner case.

An upper sealing member disposed on the upper surface and an upper portion of a front surface of the inner case is not attached to the cap decoration, but is attached to the inner case, and a lower sealing member disposed under the upper sealing member is attached to the front surface of the inner case and both surfaces of the outer plate. With this structure, the inner case may be attached to an outer case without blocking the insertion and the mounting of the upper surface of the inner case into and on the case inserting portion.

Therefore, the operation of assembling and mounting the inner case may be significantly reduced, and in particular, the screw fastening operation to fix the inner case may be significantly reduced. Thereby, the number of assembly process may be reduced and productivity thereof may be improved.

Provision of the insulating material may be prevented and a mounted state of the inner case may be maintained at an accurate position by temporary fixing the cap decoration to the inner case without fixing the inner case using a plurality of screws.

### BRIEF DESCRIPTION OF THE DRAWINGS

FIG. 1 is a perspective view of an example refrigerator.
FIG. 2 is a perspective view of a door of the refrigerator.
FIG. 3 is an enlarged view of a display and a touch manipulating portion of the door.
FIG. 4 is an exploded perspective view of an outer plate of the door.
FIG. 5 is an exploded perspective view of a display assembly separated from the door.
FIG. 6 is a cross-sectional view taken along line 6-6' of FIG. 2.
FIG. 7 is an exploded perspective view of a display cover, a display assembly, a touch assembly, and an inner case disposed inside of a door.
FIG. 8 is an exploded perspective view of a cap decoration and an inner case of the door.
FIG. 9 shows a state of assembly between the door plate, a cap decoration, and an inner case.
FIG. 10 is an enlarged view of a portion A of FIG. 9.
FIG. 11 is a cross-sectional view taken along line II-II' of FIG. 10.
FIG. 12 shows an assembly process of the inner case.
FIG. 13 is a cross-sectional view of a coupling structure of a cap decoration and an inner case of a door according to another embodiment of the present disclosure.

### DETAILED DESCRIPTION OF EXEMPLARY IMPLEMENTATIONS

Hereinafter, some embodiments of the present disclosure will be described in detail with reference to the accompanying drawings. Reference now should be made to the drawings, in which the same reference numerals are used throughout the different drawings to designate the same or similar components. In addition, a detailed description of a well-known configuration relating to the present disclosure or the function thereof may be omitted if it is apparent for the skilled person in the art.

The embodiment of the present disclosure is described by exemplifying a display disposed on a refrigerating portion door among a pair of refrigerating portion doors of a bottom freeze type refrigerator for convenience of explanation and understanding, but the present disclosure may be applied to all types of refrigerators including a door.

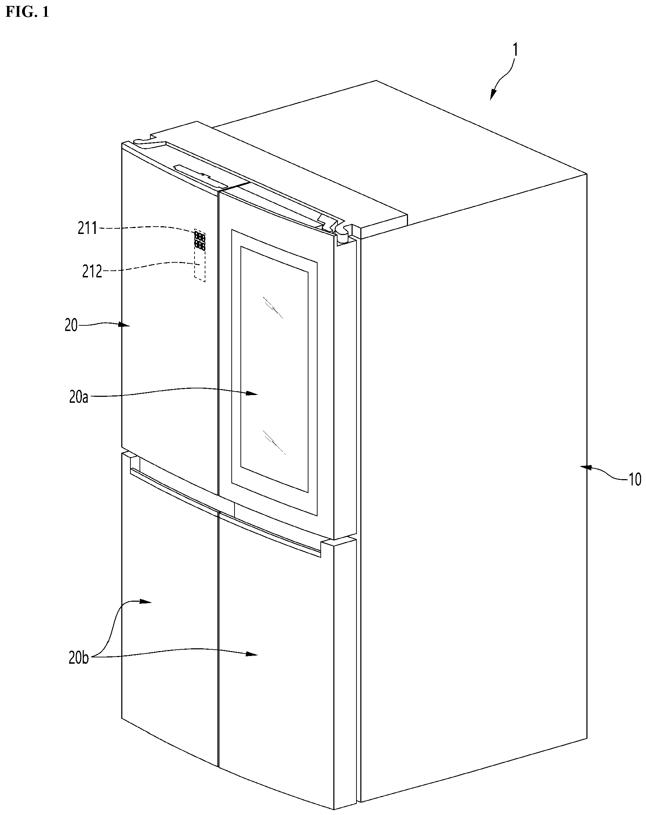

FIG. 1 is a perspective view of an example refrigerator.

Directions are defined for convenience of explanation and understanding. Hereinafter, a direction toward the floor may be referred to as "a downward direction" with respect to the floor on which a refrigerator 1 is installed and a direction opposite to the downward direction and toward a top of a cabinet 10 may be referred to as "an upward direction". In addition, a direction toward a door 20 may be referred to as "a forward direction" and a direction toward an inside of the cabinet 10 from the door 20 may be referred to as "a rearward direction". In addition, undefined directions may be determined for each drawing.

As shown, according to an embodiment of the present disclosure, an outer appearance of the refrigerator 1 may be defined by a cabinet 10 including a storage space and one or more doors 20, 20a, and 20b disposed on a front surface of the cabinet 10 to open and close the one or more storage spaces.

The storage space of the cabinet 10 may be divided into an upper portion and a lower portion. A refrigerating portion may be disposed at the upper portion thereof and a freezing portion may be disposed at the lower portion thereof. A plurality of doors 20, 20a, and 20b may be disposed on the opened front surface of the storage space to open and close spaces thereof. The door may open and close the storage space in a sliding and/or rotation manner. The door may define a front appearance of the refrigerator 1 in a closed state.

The door may include a pair of refrigerating portion doors 20 and 20a to close the refrigerating portion and/or a pair of freezing portion doors 20b to close the freezing portion. Both sides of the pair of refrigerating portion doors 20 and 20a and the pair of freezing portion doors 20b are rotatably coupled and may open and close the refrigerating portion and the freezing portion based on the rotation.

Meanwhile, although not shown, a dispenser may be disposed on the front surface of the refrigerating portion door 20 to dispense water and/or ice.

Although not shown in detail, the refrigerating portion door 20a at the right side among the refrigerating portion doors 20 and 20a on the left and right sides may include a main door defining an additional door storage space and an opening and a sub door to open and close the main door.

A portion of the sub door may be selectively transparent so that the user may see the door storage space.

A display 211 and a touch manipulating portion 212 may be disposed on the left-sided refrigerating portion door 20. Preferably, the display 211 and a touch manipulating portion 212 may be disposed at a height at which a user can easily manipulate and/or identifies the display 211 and/or the touch manipulating portion 212.

Hereinafter, structures of the display 211 and the touch manipulating portion 212 are described.

So the refrigerating portion door 20 on the left side is referred to as a door 20.

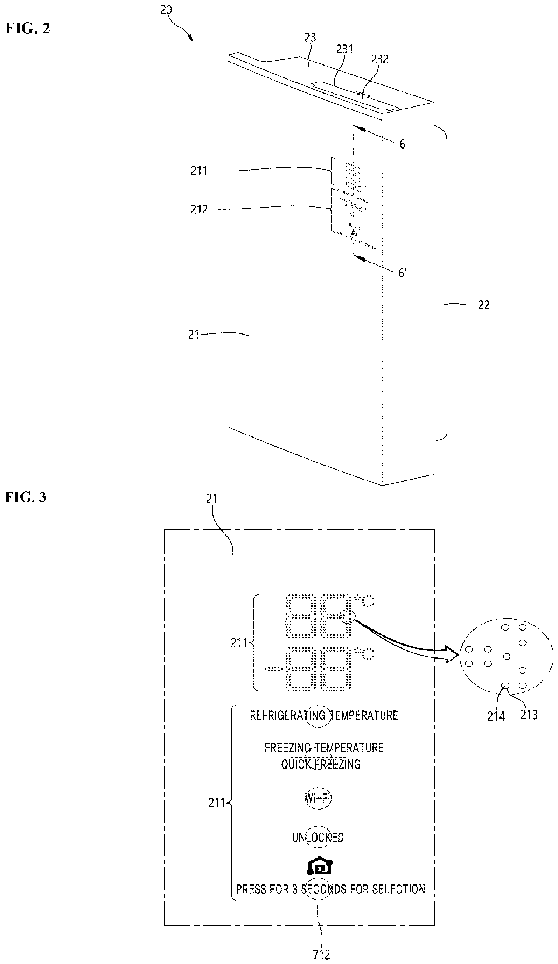

FIG. 2 is a perspective view of a door of the refrigerator. FIG. 3 is an enlarged view of a display and a touch manipulating portion of the door.

As shown in the drawing, an outer appearance of the door 20 may be defined by coupling an outer plate 21 defining a front appearance, a door liner 22 defining a rear appearance of the door 20, and a cap decoration 23 disposed at an upper side and a lower side of the door 20.

The outer plate 21 may define the front appearance of the door 20, may have a plate shape, and may be made of metal. The outer plate 21 may be formed of a stainless steel plate or a color steel plate (made of vinyl coated metal (VCM) and pre-coated metal (PCM)) having a stainless texture. For example, the outer plate 21 may have a thickness of about 0.5 mm. The front surface of the outer plate 21 exposed to the outside may be subjected to anti-fingerprint treatment, may have a specific color, pattern, a shape, or a hairline with a metal texture.

Meanwhile, the outer plate 21 may include a display 211 and a touch manipulating portion 212

The display 211 indicates an operation state of the refrigerator 1 to the outside by symbols and/or numbers, and the like, based on transmission of light from an inside of the door 20 through the outer plate 21. Thus, the user may identify operation information of the refrigerator 1 from outside

The display 211 may be visible from the outside by a plurality of through-holes 213 defined in a partial area of the outer plate 21. The display 211 may include a set of the plurality of through-holes 213 having a continuous predetermined arrangement to display numbers and/or symbols. For example, the set of the plurality of through-holes 213 may have a 7-segment shape and/or may be arranged in a form of specific symbol, a shape of pattern, or the letter to indicate the state of the refrigerator 1.

The arrangement of the through-hole 213 corresponds to an arrangement of a plurality of through-holes 312 and 614 described below and light may be transmitted to the through-hole 213 from a light emitting member 511 of a display assembly 40. The through-hole 213 of the outer plate 21 may be referred to as a first through-hole 213 for distinguishing from the through-hole 312 of the display cover 30 and the through-hole 614 of the display assembly 40.

The first through-hole 213 may be a fine hole having a small diameter. For example, the first through-hole 213 may have a diameter of 0.4 to 0.7 mm and may be formed in various ways by laser processing, etching, or Numerically Controlled Turret (NCT) process.

The first through-hole 213 has a small size. Preferably, it may be filled with a hole filling member 214. Thus, the first through-hole 213 may not be exposed to outside when the light emitting member 511 of the display assembly is not turned on. When the light emitting member 511 is turned on, the light is transmitted through the first through-hole 213 to indicate information.

In detail, the light may be transmitted through the first through-holes 213 provided at positions corresponding to those of the light emitting members 511 transmitting the light among the first through-holes 213. Based on the transmission of the light through the first through-holes 213, the first through-holes 213 have a shape of specific numbers and/or letters to transmit information to the user.

That is, when one or more or at least a portion of the light-emitting member 511 is turned on, the light passing through the one or more first through-holes 213 may be visible from outside by transmitting the light through the one or more first through-holes 213 corresponding to the turned-on light emitting member 514 among the plurality of first through-holes 213. In this case, the first through-holes 213 may have a shape of specific number, character, and/or picture by a combination of the exposed first through-holes 213 to transmit information to the user.

When the light emitting member 511 is turned off and light is not transmitted to the inside of the door 20, the display 211 is not easily visible when viewed from the outside. When the light emitting member 511 is turned off, the door 20 defines an appearance which seems to have no information-displaying component such as the display 211.

The touch manipulating portion 212 is a portion in which a user may manipulate to operate the refrigerator 1. The touch manipulating portion 212 may be disposed in a partial area of the front surface of the door 20. The touch manipulating portion 212 may be located under and/or adjacent to the display 211.

A press-sensing portion of the touch manipulating portion 212 is subjected to surface processing such as printing or etching so that the user may see the manipulating portion.

A touch sensor assembly 70 described below may be disposed inside of the door 20 corresponding to the touch manipulating portion 212. The touch sensor assembly 70 may sense the user-pressing operation on the touch manipulating portion 212.

Hereinafter, the arrangement structure of the display assembly 40 and the touch sensor assembly 70 is described in more detail with reference to the drawings.

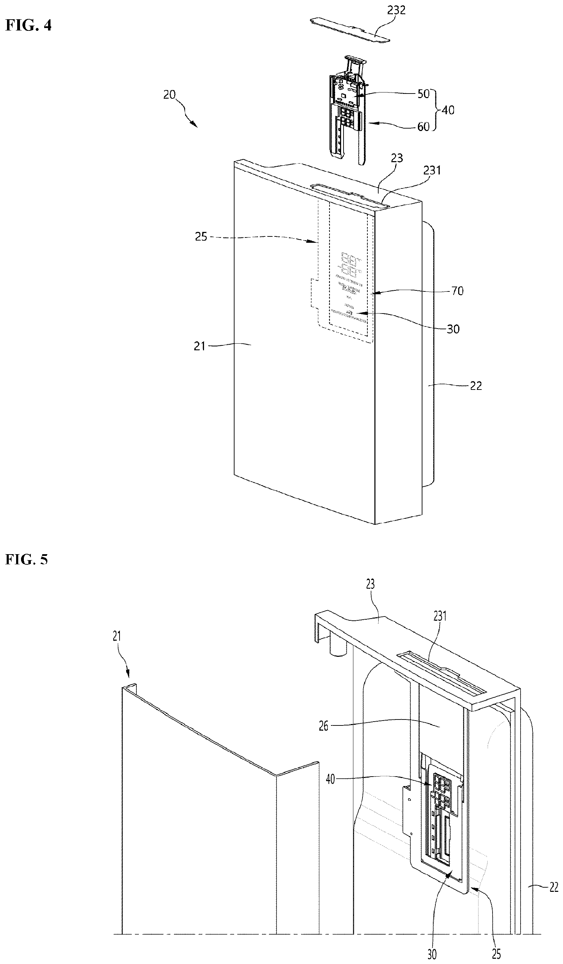

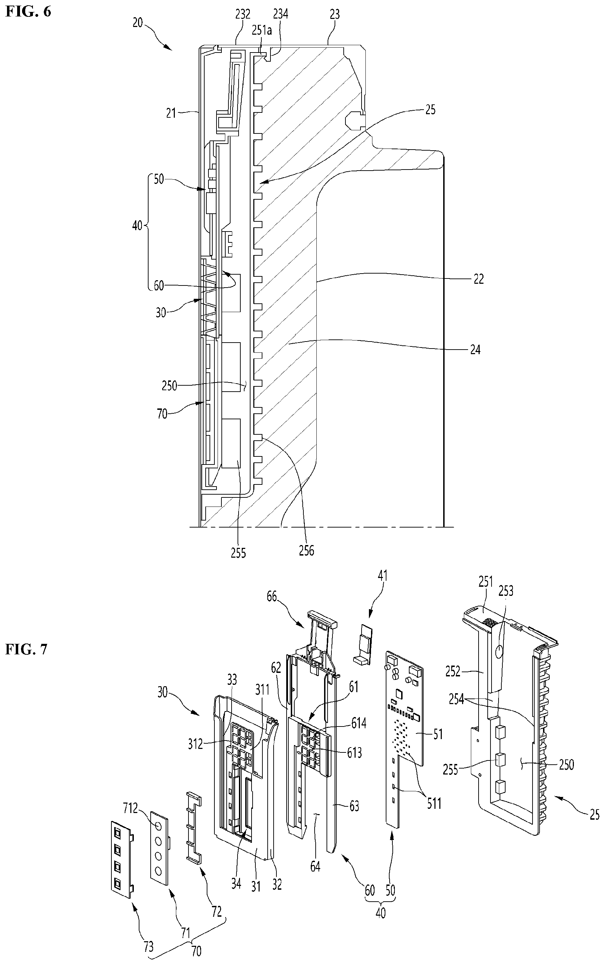

FIG. 4 is an exploded perspective view of a separated outer plate 21 of the door. FIG. 5 is an exploded perspective view of a display assembly separated from the door. FIG. 6 is a cross-sectional view taken along line 6-6' of FIG. 2.

As shown, an outer appearance of the door may be defined by an outer plate 21, a door liner 22, and a cap decoration 23 and an insulating material 42 may be formed in an inner space of the door 20 assembled by coupling the outer plate 21, the door liner 22, and the cap decoration 23. The insulating material 42 may be foam-molded by injecting foaming liquid.

An inner case 25 may be disposed inside of the door 20 to provide a space to accommodate a display cover 30, a display assembly 40, and a touch sensor assembly 70. An upper side of the inner case 25 may be coupled to a lower surface of the cap decoration 23 and a front circumference of the inner case 25 may be coupled to the outer plate 21 to provide a predetermined space. The inner case 25 forms an independent space to prevent penetration of the foaming liquid when the foaming liquid is injected into the door 20. Therefore, the inner case 25 provides the space to accommodate the display assembly 40 and the touch sensor assembly 70.

The display cover 30 may be disposed in an inner space of the inner case 25 to mount the display assembly 40. The display cover 30 may contact a rear surface of the outer plate 21. The display cover 30 has an opening at an upper side thereof and the display assembly 40 may be inserted through the opening from a top to a bottom thereof.

A reinforcing plate 26 may be further disposed between an upper side of the display cover 30 and the cap decoration 23. The reinforcing plate 26 is attached to a rear surface of the outer plate 21 and may prevent the outer plate 21 from being bent into the inner space of the inner case 25.

The opened upper surface of the inner case 25 may communicate with or correspond to a decoration opening 231 of the cap decoration 23. The decoration opening 231 may be opened and closed by a decoration cover 232. The display assembly 40 may be inserted into the inner space of the inner case 25 by the operation of the decoration cover 232.

In this case, the display cover 30 has an open top surface, and when the display assembly 40 is inserted into the inner case 25, the display assembly 40 may be inserted through the open top surface of the display cover 30. The display assembly 40 may be completely inserted into the display cover 30 by its own weight. When the decoration cover 232 closes the decoration opening 231, a lower surface of the decoration cover 232 presses an upper surface of the display assembly 40 to completely insert the display assembly 40.

The display assembly 40 is guided to be mounted at an accurate position when the display assembly 40 is inserted into the display cover 30. That is, the display assembly 40 and the display cover 30 have a plurality of structures and elements that are in contact with each other or are assembled to each other, and with this structure, the display assembly 40 may be mounted at the accurate position of the display cover 30. This is important to guarantee that light emitted by the display assembly 40 can pass through the correct through holes to thereby correctly display the desired information.

When the display assembly 40 is mounted at the accurate position inside of the display cover 30, the light emitting member 511 and the third through-hole 614 of the display assembly 40, the second through-hole 312 of the display cover 30, and the first through-hole 213 of the outer plate 21 may be aligned to communicate with one another. When the light emitting member 511 is turned on, the light may be transmitted to the outside from the light emitting member 511 by sequentially passing through the third through-hole 614, the second through-hole 312, and the first through-hole 213.

FIG. 7 is an exploded perspective view of a display cover 30, a display assembly 40, a touch assembly 70, and an inner case 25 disposed inside of a door 20.

As shown in the drawing, an inner case 25 may be disposed inside of a door 20, a display cover 30 may be disposed in an inner area of the inner case 25, and a display assembly 40 and a touch sensor assembly 70 may each be disposed in the display cover 30.

The inner case 25 includes a case upper surface 251 and a case front surface 252 and provides a space 250 opened to the front and the top. The case upper surface 251 contacts a cap decoration 23 and the case front surface 252 contacts a rear surface of an outer plate 21. The case front surface 252 may be defined along a remaining circumference of the inner case 25 except for an upper side of the space 250.

A reinforcing rib 256 is disposed on a rear surface of the inner case 25 to prevent deformation of the inner case 25 by a pressure during the molding of an insulating material 24. A wire hole 253 may be defined at an upper portion of the inner case 25, may pass through a side of the inner case 25, and wires for connecting the display assembly 40 and the touch sensor assembly 70 disposed inside of the inner case 25 are inserted into or are taken out from the wire hole 253.

Cover supporters 255 that protrude inward into the space 250 may be disposed on left surface and/or right surfaces of the space 250 of the inner case 25. The cover supporter 255 may support the display cover 30 from the rear and the display cover 30 may contact the rear surface of the outer plate 21.

A case groove 254 may be defined above any one of the cover supporter 255 and may be recessed laterally. The case groove 254 provides a space to accommodate an upper guide 321 at the upper portion of the display cover 30.

The display cover 30 may be disposed inside of the inner case 25. A cover front surface 31 of the display cover 30 may contact the rear surface of the outer plate 21. A cover rear surface 33 may be spaced apart from the cover front surface 31 and a space to accommodate the display assembly 40 may be defined by a cover circumferential surface 32 connecting the cover front surface 31 and the cover rear surface 33.

The display cover 30 may include a cover light guide 311 having a plurality of second through-holes 312. A sensor assembly mounting portion 34 may be recessed from the cover front surface 31 to mount the sensor touch assembly 70.

The display assembly 40 may include a display printed circuit board (PCB) 50 onto which the light emitting member 511 are mounted and a display frame 60 to couple and mount the display PCB 50 and inserted through the decoration opening 231 from an outside of the door 20.

The display frame 60 may include a handle 66, a first side extension portion 62 and a second side extension portion 63 that extend from both sides and are spaced apart from each other, and a frame light guide 61 connecting the first side extension portion 62 and the second side extension portion 63. The frame light guide 61 may include a third through-hole 614 that communicates with the second through-hole 312. A Wi-Fi module 41 may be disposed on the handle 66.

The touch sensor assembly 70 may include a touch PCB 71 on which the touch sensor 712 is mounted, an elastic member 72 to elastically support the touch PCB 71, and a touch cover 73 to cover the touch PCB 71. The elastic member 72, the touch PCB 71, and the touch cover 73 may be sequentially mounted on the assembly mounting portion 34.

The inner case 25 may be coupled to each of the outer plate 21 and the cap decoration 23. When the inner case 25 is mounted at the accurate position and maintains the mounted state, positions of the light emitting members 511 may be maintained to correspond to those of the plurality of through-holes 213, 312, and 614. Therefore, the inner case 25 may have a coupling structure with the cap decoration 23.

Hereinafter, the coupling structure between the inner case 25 and the cap decoration 23 is described in more detail with reference to the drawings.

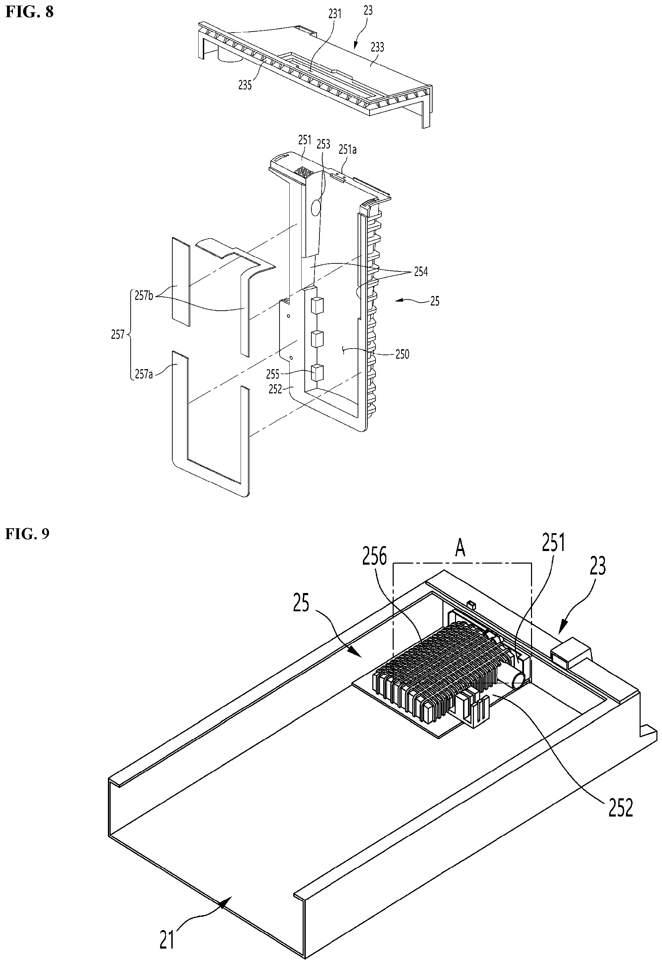

FIG. 8 is an exploded perspective view of a cap decoration and an inner case of the door.

As shown in the drawing, a case upper surface 251 of an inner case 25 is coupled to a lower surface of a cap decoration 23. A case front surface 252 of the inner case 25 may be coupled to an inner surface of an outer plate 21.

The inner case 25, the cap decoration 23, and the outer plate 21 may be assembled before foaming liquid is injected into a door 20 to form an insulating material 24. In this case, a sealing member 257 may be disposed between the inner case 25, the outer plate 21, and the cap decoration 23.

The sealing member 257 seals a space between the case upper surface 251 and the cap decoration 23, and a space between the case front surface 252 and the outer plate 21 to prevent introduction of the foaming liquid when the foaming liquid is injected into the door 20 for molding the insulating material 24. For the sealing, the sealing member 257 may be made of compressible material. The sealing member 257 may be attached along the case upper surface 251 and the case front surface 252.

A portion of the sealing member 257 may be made of adhesive material and may remain mounted at the accurate position. The sealing member 257 may include an upper sealing member 257b disposed at an upper portion of the inner case 25 and a lower sealing member 257a disposed at a lower portion of the inner case 25.

The upper sealing member 257b may be disposed on the case upper surface 251 and a portion of an upper portion of the case front surface 252. A surface of the upper sealing member 257b may be attached to an inside of the inner case 25. Accordingly, the upper sealing member 257b may pressurize and contact the cap decoration 23 and the outer plate 21 when the inner case 25 is coupled. The upper sealing member 257b may not have a simple contact structure in which the cap decoration 23 and the outer plate 21 are adhered, but may have a sealing structure by compression owing to an upper surface of the inner case 25 inserted to the lower surface of the upper cap decoration 23 by rotation.

The lower sealing member 257a may be disposed below the upper sealing member 257b and may be located along the case front surface 252 at the lower portion of the inner case 25. Both surfaces of the lower sealing member 257a may be adhered. For example, the lower sealing member 257a may have a structure like a double-sided tape. A first surface of the lower sealing member 257a may be adhered to the case front surface 252 and a second surface of the lower sealing member 257a may be adhered to the inner surface of the outer plate 21.

The structure allows for easy coupling between the inner case 25 and the cap decoration 23 and firm fixing of the inner case 25 by adhesion between the inner case 25 and the outer plate 21.

The case upper surface 251 is coupled to the lower surface of the cap decoration 23. When the inner case 25 is mounted, a decoration opening 231 of the cap decoration 23 may communicate with an accommodating space 250 of the inner case 25. Therefore, the display assembly 40 may be inserted into the inner case 25 by the cap decoration 23.

Hereinafter, the coupling structure of the cap decoration 23 and the inner case 25 is described in more detail with reference to the drawings.

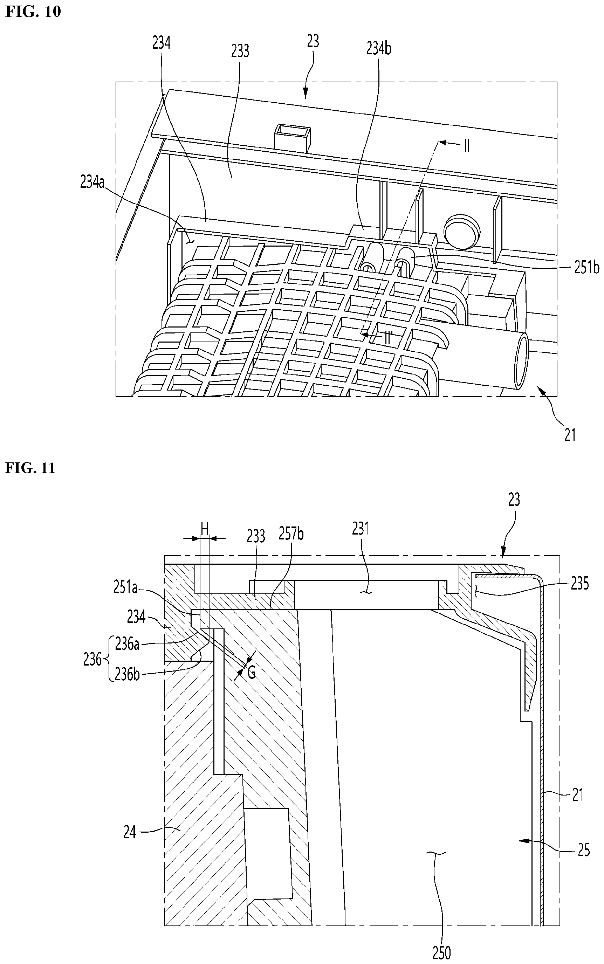

FIG. 9 shows a state of assembly between the outer plate 21, a cap decoration 23, and an inner case 25. FIG. 10 is an enlarged view of a portion A of FIG. 9. FIG. 11 is a cross-sectional view taken along line II-II' of FIG. 10.

As shown in the drawing, a door 20 may be assembled by coupling an outer plate 21, a cap decoration 23, and an inner case 25 before foaming for molding of an insulating material 24.

In this case, an upper surface 233 of the cap decoration 23 may define an upper appearance of the door 20 and a plate inserting portion 235 may be disposed along a circumference of the upper surface 233 of the cap decoration 23. The plate inserting portion 235 may have a groove shape such that a bending end of the outer plate 21 may be inserted into the groove and may be disposed on a front surface and both sides of the upper surface 233 of the cap decoration 23. Accordingly, an upper side of the outer plate 21 may be coupled to the circumference of the upper surface 233 of the cap decoration 23.

A case inserting portion 234 may be disposed on the upper surface 233 of the cap decoration 23 and may extend downward to accommodate an upper side of the inner case 25. The case inserting portion 234 may extend downward from the upper surfaces 233 of the cap decoration 23 in the inner surface of the door 20, and the case upper surface 251 may be inserted into and coupled to the case inserting portion 234.

The case inserting portion 234 may have a shape corresponding to that of the case upper surface 251 and may be defined along the position corresponding to that of the case upper surface 251. The case inserting portion 234 includes an insertion space 234a that is opened downward, and the inner case 25 is moved from the bottom to the top and the case upper surface 251 may be inserted into the insertion space 234a.

The case inserting portion 234 may contact along a circumference of the case upper surface 251. Accordingly, the inner case 25 may be aligned at the accurate position of the cap decoration 23 when the upper surface of the inner case 25 is inserted into the insertion space 234a of the case inserting portion 234.

Both ends of the case inserting portion 234 may contact the inner surface of the outer plate 21. Both side surfaces of the case inserting portion 234 may extend rearward and a rear surface thereof may be connected between the extending ends of both side surfaces of the case inserting portion 234. The insertion space 234a may be formed by coupling the case inserting portion 234 defining three surfaces of the insertion space 234a and the outer plate 21 defining a remaining surface of the insertion space 234a. When the inner case 25 is mounted, the front surface of the case upper surface 251 may contact the outer plate 21 and the remaining three surfaces of the case upper surface 251 may contact the case inserting portion 234.

The case inserting portion 234 may further define a protrusion 234b that protrudes at a portion of a rear surface of the case inserting portion 234. The protrusion 234b may receive a fastening portion 251b that protrudes rearward from the upper surface of the inner case 25. That is, the protrusion 234b may have a shape corresponding to that of the fastening portion 251b. A screw may be fastened to the fastening portion 251b through the cap decoration 23. When the decoration cover 232 is mounted, the screw may sequentially pass through the decoration cover 232 and the cap decoration 23 and may be fastened to the fastening portion 251b. The decoration cover 232, the cap decoration 23, and the inner case 25 may be firmly coupled by fastening the screw.

The decoration opening 231 may be defined in the inner area of the insertion space 234a, and when the case upper surface 251 is inserted into and mounted in the insertion space 234a, the decoration opening 231 may communicate with an inside of the accommodating space 250 of the inner case 25.

A restraining protrusion 236 that protrudes inward is defined at the extending end of the case inserting portion 234. The restraining protrusion 236 may protrude to the inside of the accommodating space 250 and a height of a protruding end of the restraining protrusion 236 may be taller than a position of a restraining end 251a of the case upper surface 251 by a set height (H) when the inner case 25 is mounted. For example, as the set height (H) is 1 mm or more, a sufficient amount of engagement and restraint may be obtained.

That is, the restraining protrusion 236 may protrude forward than the restraining end 251a of the upper surface 251 by the set height. When the upper surface of the inner case 25 is mounted, the restraining end 251a of the case upper surface 251 is engaged with and restrained by the restraining protrusion 236, thereby blocking separation of a rear end of the inner case 25.

The restraining protrusion 236 may be defined entirely along the case inserting portion 234. A plurality of restraining protrusions 236 may be arranged along the case inserting portion 234 by a predetermined distance.

The restraining protrusion 236 may be inclined to insert the restraining end 251a of the inner case 25 when the inner case 25 is mounted. In detail, the upper surface 236a of the restraining protrusion 236 may be inclined downward toward a protruding portion. The lower surface 236b of the restraining protrusion 236 is inclined upward toward a protruding portion. Accordingly, a point where the upper surface 236a and the lower surface 236b meet may be a furthest protruding portion of the restraining protrusion 236.

With this structure, when the inner case 25 is mounted, the restraining end 251a of the case upper surface 251 is inserted through the restraining protrusion 236, and in the insertion state, the restraining end 251a is engaged and restrained.

An extending line of the inclined upper surface 236a and the restraining end 251a of the case upper surface 251 may be spaced apart from each other by a set distance (G). The set distance (G) is determined in consideration of a compression amount of an upper sealing member 257b attached to the case upper surface 251 when the inner case 25 is inserted and mounted, and when the inner case 25 is mounted, the upper sealing member 257b may be compressed. Therefore, the set distance (G) may be smaller than a thickness of the upper sealing member 257b, and for example, the set distance (G) may be about 0.3 mm.

Hereinafter, an assembly process of the inner case 25 having the above structure is described with reference to the drawings.

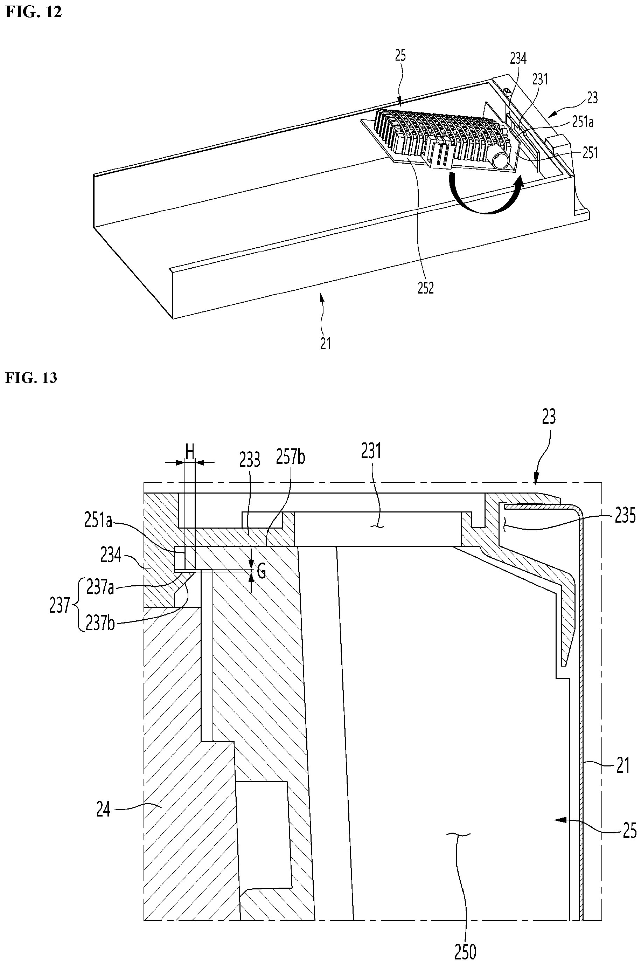

FIG. 12 shows an assembly process of the inner case.

As shown in the drawing, an outer plate 21 and a cap decoration 23 are coupled to each other before an inner case 25 is assembled. The outer plate 21 may be coupled to the cap decoration 23 by inserting a bent upper side of the outer plate 21 into a plate inserting portion 235 of the cap decoration 23. The outer plate 21 may be additionally restrained when the outer plate 21 is coupled to the cap decoration 23.

The inner case 25 is mounted in a state in which the cap decoration 23 is coupled to the outer plate 21. An upper sealing member 257b and a lower sealing member 257a of the inner case 25 may be attached to a case upper surface 251 and a case front surface 252 before the inner case 25 is mounted. The lower sealing member 257a may have an additional adhesive structure for adhesion to the outer plate 21.

In order to mount the inner case 25, the inner case 25 is arranged to face the case upper surface 251 upward and face the case front surface 252 forward and the case upper surface 251 is moved upward from downward to face the case inserting portion 234.

In this case, the inner case 25 is moved upward in a tilted state in which a lower surface of the inner case 25 is separated from the outer plate 21 and an upper surface of the inner case 25 contacts the outer plate 21 and the case upper surface 251 is inserted into the case inserting portion 234.

That is, the inner case 25 is moved upward to insert the case upper surface 251 into the case inserting portion 234, and a lower portion of the inner case 25 may be moved by rotating counterclockwise (see FIG. 12). By the mounting, a restraining end 251a of the case upper surface 251 may be inserted through a restraining protrusion 236 of the case inserting portion 234.

The upper sealing member 257b may not affect the coupling process of inserting the upper surface of the inner case 25 into the upper surface 233 of the cap decoration 23 in the tilted state and engaging and restraining the cap decoration 23 and the inner case 25 with each other based on the rotation. When the inner case 25 is coupled to the cap decoration 23, the upper sealing member 257 may be pressurized to seal between the inner case 25 and the cap decoration 23.

When the lower portion of the inner case 25 is rotated in a state in which an upper portion of the inner case 25 is fixed, the lower sealing member 257a may contact an inner surface of the outer plate 21 and the case front surface 252 may contact the outer plate 21.

When the inner case 25 is coupled, the case upper surface 251 may contact the upper surface 233 of the cap decoration 23 and the restraining end 251a of the case upper surface 251 may be restrained by the restraining protrusion 236 of the case inserting portion 234, and the case upper surface 251 and the upper surface 233 may be sealed by the upper sealing member 257b. The case front surface 252 and the outer plate 21 may contact each other and may be sealed.

In this state, the door liner 22 and additional components of the door 20 are coupled and the foaming liquid is injected into the door 20 to from the insulating material 24. Even if the foaming liquid is injected when molding the insulating material 24, the foaming liquid may not penetrate between the inner case 25 and the cap decoration 23 or the inner case 25 and the outer plate 21.

Various other embodiments of the present disclosure are possible in addition to the above-described embodiments. According to another embodiment of the present disclosure, the inner case 25 is more firmly restrained by the restraining protrusion 236. Other embodiments of the present disclosure are the same as the above-mentioned embodiment except for the shape of the restraining protrusion 236. The same reference numerals are used for the same components as in the above-mentioned embodiment and a description thereof is omitted.

FIG. 13 is a cross-sectional view of a coupling structure of a cap decoration and an inner case of a door according to another embodiment of the present disclosure.

As shown, a bending end of an outer plate 21 may be inserted into a plate inserting portion 235 around a cap decoration 23. The inner case 25 may be coupled in a state in which the outer plate 21 and the cap decoration 23 are coupled.

When the inner case 25 is coupled, a case upper surface 251 may contact an upper surface 233 of the cap decoration 23, and a space between the case upper surface 251 and the upper surface 233 may be sealed by an upper sealing member 257b. A restraining end 251a of the case upper surface 251 may be restrained by a restraining protrusion 237 when the inner case 25 is coupled to the cap decoration 23.

The restraining protrusion 237 may protrude to an inside of an accommodating space 250 and a height of a protruding portion of the restraining protrusion 237 may be taller than a position of the restraining end 251a of the case upper surface 251 when the inner case 25 is mounted by a set height (H). For example, the set height may be equal or greater than 1 mm and a sufficient amount of engagement and restraint may be obtained.

That is, the restraining protrusion 237 may protrude forward from the restraining end 251a of the case upper surface 251 by the set height. Therefore, when the case upper surface 251 is mounted, the restraining end 251a of the case upper surface 251 may be engaged with and restrained by the restraining protrusion 237 to prevent separation of a rear end of the inner case 25.

In this case, an upper surface 237a of the restraining protrusion 237 may extend in parallel to the upper surface 233 of the cap decoration 23, and when the inner case 25 is mounted, the restraining end 251a of the case upper surface 251 is firmly restrained by the restraining protrusion 237 to block the rear end of the inner case 25 from being easily separated.

An extending line of the upper surface 237a and the restraining end 251a of the case upper surface 251 may be spaced apart from each other by a set distance (G). The set distance (G) is determined in consideration of a compression amount of the upper sealing member 257b attached to the case upper surface 251 when the inner case 25 is inserted and mounted, and when the inner case 25 is mounted, the upper sealing member 257b may be compressed. In this case, the set distance (G) may be smaller than a thickness of the upper sealing member 257b, and for example, may be about 0.3 mm.

A lower surface 237b of the restraining protrusion 237 may be inclined upward toward a protruding portion. Accordingly, the restraining end 251a of the inner case 25 may be moved upward along the inclined lower surface 237b when the inner case 25 is inserted while moving upward from downward.

When the inner case 25 is coupled to and is completely restrained by the cap decoration 23, the case front surface 252 may be adhered to and coupled to the inner surface of the outer plate 21.

When the inner case 25 is fixedly coupled to the cap decoration 23 and the outer plate 21, other components of the door 20 including the door liner 22 are further assembled and the foaming liquid is injected to complete the assembly of the door 20.

## Claims

1. A refrigerator, comprising: a cabinet (10) having a storage space and a door (20) configured to open and close the cabinet (10), wherein the door (20) comprises:
a cap decoration (23) defining an upper surface of the door (20);
an outer plate (21) defining a front appearance of the door (20) and comprising a display (211) configured to indicate predetermined operation information; and
an inner case (25) disposed on a rear surface of the outer plate (21), coupled to a rear side of the display (211), and comprising an accommodating space (250) and comprising a case upper surface (251) defining an upper surface (251) of the inner case (25) and that contacts an inner upper surface of the cap decoration (23);
wherein a front surface (252) of the inner case (25) is coupled to the outer plate (21) and the upper surface (251) of the inner case (25) is coupled to the cap decoration (23), and
wherein the cap decoration (23) comprises a case inserting portion (234) configured to restrain the upper surface (251) of the inner case (25);
**characterized in that**:
the inner case (25) comprises a restraining end (251a) that extends outward along a circumference of the case upper surface (251), and
wherein the cap decoration (23) comprises a restraining protrusion (236, 237) that protrudes inward from the case inserting portion (234) and is engaged with and restrained by the restraining end (251a), and
wherein a lower surface (236b, 237b) of the restraining protrusion (236, 237) is inclined upward toward a protruding portion, and wherein an upper surface (236a, 237a) of the restraining protrusion (236, 237) is engaged with and restrained by the restraining end (251a).

2. The refrigerator of claim 1, wherein the inner case (25) comprises:
a case front surface (252) that extends outward from the accommodating space (250) and contacts an inner surface of the outer plate (21).

3. The refrigerator of claim 2, further comprising a sealing member (257) made of compressive material and disposed on the case upper surface (251) and the case front surface (252) and configured to seal between the inner case (25), the outer plate (21), and the cap decoration (23).

4. The refrigerator of any one of the preceding claims, wherein a sealing member (257) is disposed between the upper surface of the case (25) and a lower surface of the cap decoration (23), and/or
wherein an extension line of the upper surface of the restraining protrusion (236, 237) is spaced apart from the restraining end (251a) by a set distance (G), wherein the set distance (G) is smaller than a thickness of the sealing member (257).

5. The refrigerator of claim 2 or 4,
wherein the inner case (25) is inserted into the case inserting portion (234) to engage and restrain the restraining end (251a) with and by the restraining protrusion (236, 237) and
wherein the inner case (25) is coupled to the outer plate (21) by rotating a lower portion of the inner case toward the outer plate (21).

6. The refrigerator of any one of the preceding claims 2-5, further comprising:
an upper sealing member (257b) adhered to the case upper surface (251) and an upper portion of the case front surface (252) and configured to seal between the inner case (25) and the cap decoration (23); and
a lower sealing member (257a) adhered under the upper sealing member (257b) along the case front surface (252) and configured to seal between the inner case (25) and the outer plate (21).

7. The refrigerator of claim 6, wherein a surface of the upper sealing member (257b) is adhered to the inner case (25) and two surfaces of the lower sealing member (257a) are adhered to the inner case (25) and the outer plate (21).

8. The refrigerator of any one of the preceding claims, wherein the case inserting portion (234) extends downward to contact an outer circumference of the upper surface (251) of the inner case (25).

9. The refrigerator of any one of the preceding claims, further comprising at least one of:
a decoration opening (231) communicating with an accommodating space (250) of the inner case (25),
a decoration cover (232) configured to cover an upper side of the decoration opening (231) to open and close the decoration opening (231).

10. The refrigerator of any one of the preceding claims, further comprising at least one of
a fastening portion (251b) disposed at an upper side of the inner case (25),
a screw fastened to the fastening portion (251b) through the decoration cover (232) and the cap decoration (23).

11. The refrigerator of claim 10, wherein the case inserting portion (234) comprises a protrusion (234b) that protrudes rearward to accommodate the fastening portion (251b).

12. The refrigerator of any one of the preceding claims, wherein a front side of the upper surface (251) of the inner case (25) is restrained by the outer plate (21) and/or wherein both sides and a rear side of the upper surface (251) of the inner case (25) are restrained by the case inserting portion (234).

13. The refrigerator of any one of the preceding claims, wherein the door (20) comprises at least one of: an insulating material filled in the door (20); and a display assembly (40) inserted through the decoration opening (231) form an outside and accommodated in the accommodating space (250).

## Patentansprüche

1. Kühlschrank, der Folgendes umfasst: ein Gehäuse (10), das einen Vorratsraum und eine Tür (20), die konfiguriert ist, das Gehäuse (10) zu öffnen und zu schließen, aufweist, wobei die Tür (20) Folgendes umfasst:
eine Aufsatzdekoration (23), die eine obere Oberfläche der Tür (20) definiert;
eine äußere Platte (21), die ein vorderes Erscheinungsbild der Tür (20) definiert und eine Anzeige (211) umfasst, die konfiguriert ist, vorgegebene Betriebsinformationen anzuzeigen; und
ein Innengehäuse (25), das an einer hinteren Oberfläche der äußeren Platte (21) angeordnet ist, mit einer Rückseite der Anzeige (211) gekoppelt ist und einen Aufnahmeraum (250) umfasst, und das eine obere Gehäuseoberfläche (251) umfasst, die eine Oberseite (251) des Innengehäuses (25) definiert und mit einer inneren oberen Oberfläche der Aufsatzdekoration (23) in Kontakt ist;
wobei eine vordere Oberfläche (252) des Innengehäuses (25) mit der äußeren Platte (21) gekoppelt ist und die obere Oberfläche (251) des Innengehäuses (25) mit der Aufsatzdekoration (23) gekoppelt ist, und
wobei die Aufsatzdekoration (23) einen Gehäuseeinsetzabschnitt (234) umfasst, der konfiguriert ist, die obere Oberfläche (251) des Innengehäuses (25) zu begrenzen; **dadurch gekennzeichnet, dass**:
das Innengehäuse (25) ein Begrenzungsende (251a) umfasst, das sich längs eines Umfangs der oberen Gehäuseoberfläche (251) nach außen erstreckt, und
wobei die Aufsatzdekoration (23) einen Begrenzungsvorsprung (236, 237) umfasst, der vom Gehäuseeinsetzabschnitt (234) nach innen vorsteht und mit dem Begrenzungsende (251a) in Eingriff ist und durch diesen begrenzt wird, und
wobei eine untere Oberfläche (236b, 237b) des Begrenzungsvorsprungs (236, 237) zum vorstehenden Abschnitt hin schräg nach oben verläuft, und wobei eine obere Oberfläche (236a, 237a) des Begrenzungsvorsprungs (236, 237) mit dem Begrenzungsende (251a) in Eingriff ist und durch dieses begrenzt wird.

2. Kühlschrank nach Anspruch 1, wobei das Innengehäuse (25) Folgendes umfasst:
eine vordere Gehäuseoberfläche (252), die sich vom Aufnahmeraum (250) nach außen erstreckt und mit einer inneren Oberfläche der äußeren Platte (21) in Kontakt ist.

3. Kühlschrank nach Anspruch 2, der ferner ein Dichtungselement (257) umfasst, das aus einem komprimierbaren Material gefertigt ist und an der oberen Gehäuseoberfläche (251) und der vorderen Gehäuseoberfläche (252) angeordnet ist und konfiguriert ist, zwischen dem Innengehäuse (25), der äußeren Platte (21) und der Aufsatzdekoration (23) abzudichten.

4. Kühlschrank nach einem der vorhergehenden Ansprüche, wobei ein Dichtungselement (257) zwischen der oberen Gehäuseoberfläche (25) und einer unteren Oberfläche der Aufsatzdekoration (23) angeordnet ist, und/oder
wobei eine Verlängerungslinie der oberen Oberfläche des Begrenzungsvorsprungs (236, 237) vom Begrenzungsende (251a) mit einem festgelegten Abstand (G) beabstandet ist, wobei der festgelegte Abstand (G) kleiner als eine Dicke des Dichtungselements (257) ist.

5. Kühlschrank nach Anspruch 2 oder 4,
wobei das Innengehäuse (25) in den Gehäuseeinsetzabschnitt (234) eingesetzt ist, so dass es mittels des und durch den Begrenzungsvorsprung (236, 237) mit dem Begrenzungsende (251a) in Eingriff gelangt und durch dieses begrenzt ist, und
wobei das Innengehäuse (25) mit der äußeren Platte (21) gekoppelt wird, indem ein unterer Abschnitt des Innengehäuses zur äußeren Platte (21) gedreht wird.

6. Kühlschrank nach einem der vorhergehenden Ansprüche 2-5, der ferner Folgendes umfasst:
ein oberes Dichtungselement (257b), das an der oberen Gehäuseoberfläche (251) und an einem oberen Abschnitt der vorderen Gehäuseoberfläche (252) haftet und konfiguriert ist, zwischen dem Innengehäuse (25) und der Aufsatzdekoration (23) abzudichten; und
ein unteres Dichtungselement (257a), das unter dem oberen Dichtungselement (257b) längs der vorderen Gehäuseoberfläche (252) haftet und konfiguriert ist, zwischen dem Innengehäuse (25) und der äußeren Platte (21) abzudichten.

7. Kühlschrank nach Anspruch 6, wobei eine Oberfläche des oberen Dichtungselements (257b) am Innengehäuse (25) haftet und zwei Oberflächen des unteren Dichtungselements (257a) am Innengehäuse (25) und an der äußeren Platte (21) haften.

8. Kühlschrank nach einem der vorhergehenden Ansprüche, wobei sich der Gehäuseeinsetzabschnitt (234) nach unten erstreckt, so dass er mit einem Außenumfang der oberen Oberfläche (251) des Innengehäuses (25) in Kontakt ist.

9. Kühlschrank nach einem der vorhergehenden Ansprüche, der ferner wenigstens eines der folgenden Elemente umfasst:
eine Dekorationsöffnung (231), die mit einem Aufnahmeraum (250) des Innengehäuses (25) kommuniziert,
eine Dekorationsabdeckung (232), die konfiguriert ist, eine Oberseite der Dekorationsöffnung (231) zu bedecken, um die Dekorationsöffnung (231) zu öffnen und zu schließen.

10. Kühlschrank nach einem der vorhergehenden Ansprüche, der ferner wenigstens eines der folgenden Elemente umfasst:
einen Befestigungsabschnitt (251b), der an einer Oberseite des Innengehäuses (25) angeordnet ist,
eine Schraube, die durch die Dekorationsabdeckung (232) und die Aufsatzdekoration (23) am Befestigungsabschnitt (251b) befestigt ist.

11. Kühlschrank nach Anspruch 10, wobei der Gehäuseeinsetzabschnitt (234) einen Vorsprung (234b) umfasst, der nach hinten vorsteht, um den Befestigungsabschnitt (251b) aufzunehmen.

12. Kühlschrank nach einem der vorhergehenden Ansprüche, wobei eine Vorderseite der oberen Oberfläche (251) des Innengehäuses (25) durch die äußere Platte (21) begrenzt ist, und/oder wobei beide Seiten und eine Rückseite der oberen Oberfläche (251) des Innengehäuses (25) durch den Gehäuseeinsetzabschnitt (234) begrenzt sind.

13. Kühlschrank nach einem der vorhergehenden Ansprüche, wobei die Tür (20) wenigstens eines der folgenden Elemente umfasst: ein Isoliermaterial, das in die Tür (20) gefüllt ist; und eine Anzeigeanordnung (40), die durch die Dekorationsöffnung (231) von außen eingesetzt ist und im Aufnahmeraum (250) aufgenommen ist.

## Revendications

1. Réfrigérateur, comportant : une armoire (10) ayant un espace de stockage et une porte (20) configurée pour ouvrir et fermer l'armoire (10), dans lequel la porte (20) comporte :
un habillage (23) définissant une surface supérieure de la porte (20) ;
une plaque extérieure (21) définissant un aspect avant de la porte (20) et comportant un affichage (211) configuré pour indiquer des informations de fonctionnement prédéterminées ; et
un boîtier intérieur (25) disposé sur une surface arrière de la plaque extérieure (21), couplé à un côté arrière de l'affichage (211), et comportant un espace de réception (250) et comportant une surface supérieure de boîtier (251) définissant une surface supérieure (251) du boîtier intérieur (25) et qui est en contact avec une surface supérieure intérieure de l'habillage (23) ;
dans lequel une surface avant (252) du boîtier intérieur (25) est couplée à la plaque extérieure (21) et la surface supérieure (251) du boîtier intérieur (25) est couplée à l'habillage (23), et
dans lequel l'habillage (23) comporte une partie d'insertion de boîtier (234) configurée pour retenir la surface supérieure (251) du boîtier intérieur (25) ;
**caractérisé en ce que** :
le boîtier intérieur (25) comporte une extrémité de retenue (251a) qui s'étend vers l'extérieur le long d'une circonférence de la surface supérieure de boîtier (251), et
dans lequel l'habillage (23) comporte une saillie de retenue (236, 237) qui fait saillie vers l'intérieur depuis la partie d'insertion de boîtier (234) et s'engage avec l'extrémité de retenue (251a) et est retenue par celle-ci, et
dans lequel une surface inférieure (236b, 237b) de la saillie de retenue (236, 237) est inclinée vers le haut vers une partie saillante, et dans lequel une surface supérieure (236a, 237a) de la saillie de retenue (236, 237) s'engage avec l'extrémité de retenue (251a) et est retenue par celle-ci.

2. Réfrigérateur selon la revendication 1, dans lequel le boîtier intérieur (25) comporte :
une surface avant de boîtier (252) qui s'étend vers l'extérieur depuis l'espace de réception (250) et est en contact avec une surface intérieure de la plaque extérieure (21).

3. Réfrigérateur selon la revendication 2, comportant en outre un élément d'étanchéité (257) constitué d'un matériau compressif et disposé sur la surface supérieure de boîtier (251) et la surface avant de boîtier (252), et configuré pour réaliser l'étanchéité entre le boîtier intérieur (25), la plaque extérieure (21) et l'habillage (23).

4. Réfrigérateur selon l'une quelconque des revendications précédentes, dans lequel un élément d'étanchéité (257) est disposé entre la surface supérieure du boîtier (25) et une surface inférieure de l'habillage (23), et/ou
dans lequel une ligne d'extension de la surface supérieure de la saillie de retenue (236, 237) est espacée de l'extrémité de retenue (251a) par une distance réglée (G), dans lequel la distance réglée (G) est inférieure à une épaisseur de l'élément d'étanchéité (257).

5. Réfrigérateur selon la revendication 2 ou 4,
dans lequel le boîtier intérieur (25) est inséré dans la partie d'insertion de boîtier (234) pour engager et retenir l'extrémité de retenue (251a) avec et par la saillie de retenue (236, 237) et
dans lequel le boîtier intérieur (25) est couplé à la plaque extérieure (21) en faisant tourner une partie inférieure du boîtier intérieur vers la plaque extérieure (21).

6. Réfrigérateur selon l'une quelconque des revendications 2 à 5 précédentes, comportant en outre :
un élément d'étanchéité supérieur (257b) adhérant à la surface supérieure de boîtier (251) et une partie supérieure de la surface avant de boîtier (252) et configuré pour réaliser l'étanchéité entre le boîtier intérieur (25) et l'habillage (23) ; et
un élément d'étanchéité inférieur (257a) adhérant sous l'élément d'étanchéité supérieur (257b) le long de la surface avant de boîtier (25) et configuré pour réaliser l'étanchéité entre le boîtier intérieur (25) et la plaque extérieure (21).

7. Réfrigérateur selon la revendication 6, dans lequel une surface de l'élément d'étanchéité supérieur (257b) adhère au boîtier intérieur (25) et deux surfaces de l'élément d'étanchéité inférieur (257a) adhèrent au boîtier intérieur (25) et à la plaque extérieure (21).

8. Réfrigérateur selon l'une quelconque des revendications précédentes, dans lequel la partie d'insertion de boîtier (234) s'étend vers le bas pour venir en contact avec une circonférence extérieure de la surface supérieure (251) du boîtier intérieur (25).

9. Réfrigérateur selon l'une quelconque des revendications précédentes, comportant en outre au moins un élément parmi :
une ouverture décorative (231) en communication avec un espace de réception (250) du boîtier intérieur (25),
un cache décoratif (232) configuré pour recouvrir un côté supérieur de l'ouverture décorative (231) pour ouvrir et fermer l'ouverture décorative (231).

10. Réfrigérateur selon l'une quelconque des revendications précédentes, comportant en outre au moins un élément parmi :
une partie de fixation (251b) disposée sur un côté supérieur du boîtier intérieur (25), une vis fixée à la partie de fixation (251b) à travers le cache décoratif (232) et l'habillage (23).

11. Réfrigérateur selon la revendication 10, dans lequel la partie d'insertion de boîtier (234) comporte une saillie (234b) qui fait saillie vers l'arrière pour recevoir la partie de fixation (251b).

12. Réfrigérateur selon l'une quelconque des revendications précédentes, dans lequel un côté avant de la surface supérieure (251) du boîtier intérieur (25) est retenu par la plaque extérieure (21) et/ou dans lequel les deux côtés et un côté arrière de la surface supérieure (251) du boîtier intérieur (25) sont retenus par la partie d'insertion de boîtier (234).

13. Réfrigérateur selon l'une quelconque des revendications précédentes, dans lequel la porte (20) comporte au moins un élément parmi : un matériau isolant remplissant la porte (20) ; et un ensemble d'affichage (40) inséré à travers l'ouverture décorative (231) depuis un extérieur et reçu dans l'espace de réception (250).
